# EUROPEAN PATENT APPLICATION

(11) **EP 4 446 208 A1**
(43) Date of publication of application: **16.10.2024**
(21) Application number: 22921672.6
(22) Date of filing: 07.12.2022
(51) Int. Cl.: B62J 50/21, B62J 50/22, B62K 11/14

(54) **SADDLE-TYPE VEHICLE**

(30) Priority: 21.01.2022 CN 202210069981; 25.08.2022 CN 202211045151; 31.10.2022 CN 202211360075
(71) Applicant: Zhejiang CFMOTO Power Co., Ltd., Hangzhou, Zhejiang 311100 (CN)
(72) Inventor: TANG, Yazhou, Hangzhou, Zhejiang 311100 (CN); QIN, Xiaoang, Hangzhou, Zhejiang 311100 (CN); SHEN, Yupeng, Hangzhou, Zhejiang 311100 (CN)
(74) Representative: Sun, Yiming
(86) International application number: PCT/CN2022/137306
(87) International publication number: WO 2023/138248

(57) **Abstract**

A straddle type vehicle (100) includes a vehicle body (11), a suspension assembly (12), a wheel assembly (13), a power system (14), a steering assembly (15), a vehicle-mounted terminal (17), at least one acquisition module (18), and a local area network (LAN) cable (19). The vehicle-mounted terminal (17) is capable of transmitting signals to a first portable device (300). The vehicle-mounted terminal (17) is connected to at least one acquisition module (18) by the LAN cable (19). The acquisition module (18) is capable of acquiring driving data of the straddle type vehicle (100). During the running of the straddle type vehicle (100), the vehicle-mounted terminal (17) connected to first portable device (300) is capable of transmitting the acquired driving data to the first portable device (300), and the driving data is capable of being converted into one or a plurality of instrument images for display on a display interface of the first portable device (300).

## Description

### RELATED APPLICATION INFORMATION

The present application claims the benefits of priority to Chinese Patent Applications No. 202210069981.X, entitled "Vehicle and Vehicle Assisted Driving Method", filed with the Chinese Patent Office on January 21, 2022; No. 202211045151.X, entitled "Straddle type vehicle", filed with the Chinese Patent Office on August 25, 2022; and No. 202211360075.1, entitled "Vehicle", filed with the Chinese Patent Office on October 31, 2022. The entire contents of the above-referenced applications are incorporated herein by reference.

### FIELD OF THE DISCLOSURE

The present application relates to the field of vehicles, and particularly to a straddle type vehicle.

### BACKGROUND OF THE DISCLOSURE

Motorcycles, a two or three wheeled vehicles that allow control the steering of the front wheel by hand, with one or two saddle-shaped seats for users to ride on. Motorcycles have advantages of being light-weight, being convenience, and driving quickly, and are widely used for personal transport, passenger and freight transportation, and also used as sports equipment. Motorcycles can be divided into street bikes, road racing motorcycles, off-road motorcycles, cruisers, station wagons, and the like.

Some motorcycles are provided with a centralized control screen for displaying vehicle information. In order to enhance the driving experience of motorcycle users and increase their visual experience, such centralized control screens have evolved from displaying vehicle condition data to being able to achieve more functions, including vehicle navigation, multimedia functions, and the like. With the increasing variety of functions that can be processed and displayed on the centralized control screen, hardware and software needs of the vehicle are constantly increased to achieve the above functions, thereby leading to a continuous increase in the cost of motorcycles.

### SUMMARY OF THE INVENTION

In order to address one or all of the above issues, the present application provides a straddle type vehicle with improved driving experience and reduced cost of the centralized control screen configuration.

To achieve the above objectives, the present application provides a straddle type vehicle.

The straddle type vehicle includes a vehicle body, a suspension assembly, a wheel assembly, a power system, a steering assembly, a vehicle-mounted terminal, an acquisition module, and a LAN cable. The suspension assembly is connected to the vehicle body. The wheel assembly is connected to the vehicle body by the suspension assembly. The power system is connected to the wheel assembly in a transmission mode. The steering assembly is used to control the driving direction of the straddle type vehicle, and the steering assembly is connected to the wheel assembly by the suspension assembly, the steering assembly including a steering handlebar. A first portable device of a vehicle user is detachably mounted on the front vehicle body, and the vehicle-mounted terminal is capable of transmitting signals with the first portable device. The vehicle-mounted terminal is connected to the acquisition module by the LAN cable, and the acquisition module is capable of acquiring driving data of the straddle type vehicle. When the straddle type vehicle is running, the vehicle-mounted terminal is capable of transmitting the acquired driving data to the first portable device, and the driving data is capable of being converted into instrument images for display on the display interface of the first portable device.

A straddle type vehicle includes a vehicle body, a suspension assembly, a wheel assembly, a power system, a steering assembly. The vehicle body includes a front vehicle body and a rear vehicle body with a saddle area for a user to ride defined between the front vehicle body and the rear vehicle body. The suspension assembly is connected to the vehicle body. The wheel assembly is connected to the vehicle body by the suspension assembly. The steering assembly is used for controlling a driving direction of the straddle type vehicle the steering assembly including a steering handlebar. A first portable device of a vehicle user is detachably mounted on the front vehicle body, and the straddle type vehicle is capable of transmitting signals with the first portable device. When the straddle type vehicle is running, the straddle type vehicle is capable of transmitting driving data to the first portable device, and the driving data is capable of being converted into instrument images for display on the display interface of the first portable device.

A straddle type vehicle includes a vehicle body, a suspension assembly, a wheel assembly, a power system, a steering assembly and a vehicle-mounted terminal. The vehicle body includes a front vehicle body and a rear vehicle body with a saddle area for a user to ride defined between the front vehicle body and the rear vehicle body. A first portable device of a vehicle user is detachably mounted on the front vehicle body. The suspension assembly is connected to the vehicle body. The wheel assembly includes a first wheel connected to the front vehicle body by the suspension assembly and a second wheel connected to the rear vehicle body by the suspension assembly. The steering assembly is connected to the first wheel by the suspension assembly, and the steering assembly includes a steering handlebar. The vehicle-mounted terminal is arranged on the vehicle body, the vehicle-mounted terminal is capable of acquiring driving data of the straddle type vehicle and transmitting signals with the first portable device. When the straddle type vehicle is running, the vehicle-mounted terminal transmitted signals with the first portable device is capable of transmitting the driving data to the first portable device, and the driving data is capable of being converted into instrument images for display on the display interface of the first portable device.

The first portable device capable of transmitting signals with the straddle type vehicle is detachably mounted at the front of the vehicle body. The first portable device serves as an instrument for displaying instrument images on the straddle type vehicle, thereby reducing the hardware and software requirements of the straddle type vehicle and improving the user driving experience while meeting the cost reduction of the straddle type vehicle.

### BRIEF DESCRIPTION OF THE DRAWINGS

FIG. 1 is a perspective view of a first perspective of a straddle type vehicle in an embodiment of the present application.
FIG. 2 is another perspective view of a first perspective of a straddle type vehicle in an embodiment of the present application.
FIG. 3 is a block diagram of the vehicle-mounted terminal in an embodiment of the present application.
FIG. 4 is a block diagram of a communication module in an embodiment of the present application.
FIG. 5 shows a first timing diagram of the straddle type vehicle based on OTA upgrade in an embodiment of the present application.
FIG. 6 shows a second timing diagram of the straddle type vehicle based on OTA upgrade in an embodiment of the present application.
FIG. 7 is a module diagram of the straddle type vehicle in the present application.
FIG. 8 is a schematic diagram of a display interface of the first portable device in the present embodiment.
FIG. 9 is a schematic diagram of a navigation image in the first portable device of the present embodiment.
FIG. 10 is a timing diagram of the voice interaction of the first portable device in the present embodiment.

### DETAILED DESCRIPTION

For a better understanding of the purpose, technical solutions and advantages of the present invention, a preferred embodiment of the present invention is described and illustrated below. The above-mentioned embodiments only represent several embodiments of the present invention, and the descriptions thereof are relatively specific and detailed, but should not be construed as a limitation to the scope. It should be noted that for those skilled in the art, without departing from the concept of the present invention, several modifications and improvements may be made, which all belong to the scope of the present invention. Therefore, the scope of the present invention should be determined by the appended claims.

Unless otherwise defined, the technical or scientific terms involved in this specification shall have the general meaning understood by a person with ordinary skill in the technical field to which this invention belongs. As used in this specification, the terms "a", "an", "the", "these", and the like do not denote quantitative limitations, and they may be singular or plural. As used in this specification, the terms "comprising", "including", "having" and any variations thereof are intended to cover non-exclusive inclusion.

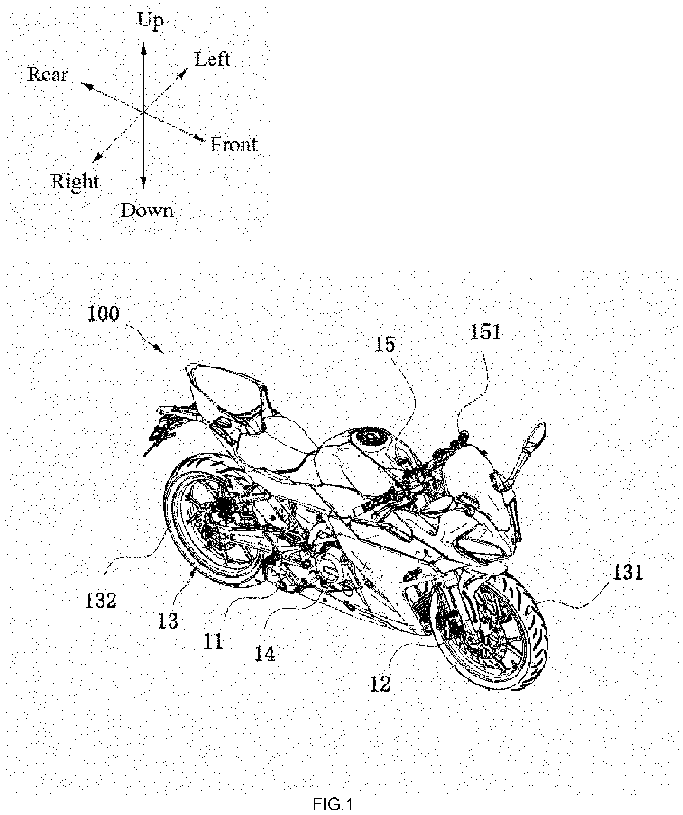

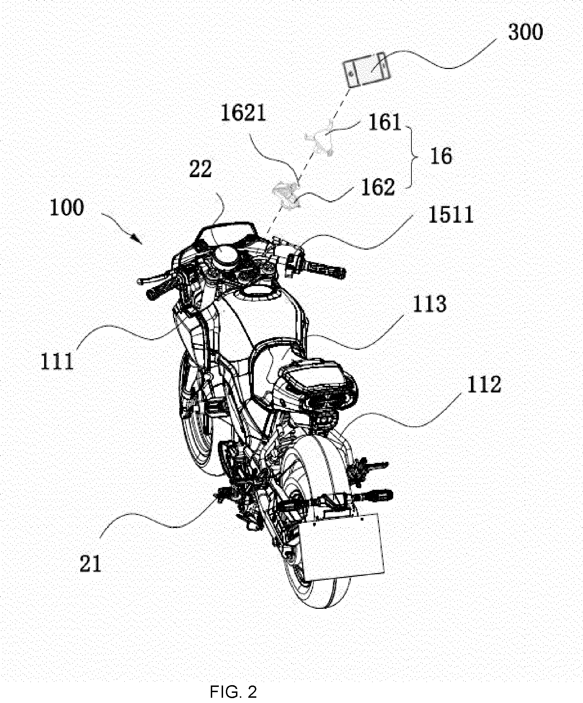

As shown in FIG. 1 and FIG. 2, a straddle type vehicle 100 includes a vehicle body 11, a suspension assembly 12, a wheel assembly 13, a power system 14, and a steering assembly 15. The vehicle body 11 includes a front vehicle body 111 and a rear vehicle body 112, with a saddle area 113 for a user to ride defined between the front vehicle body 111 and the rear vehicle body 112. The suspension assembly 12 is connected to vehicle body 11. The wheel assembly 13 includes a first wheel 131 and a second wheel 132. The first wheel 131 is connected to the front vehicle body 111 of the vehicle body 11 by the suspension assembly 12, and the second wheel 132 is connected to the rear front vehicle body 112 of the vehicle body 11 by the suspension assembly 12. The power system 14 is at least partially mounted on the vehicle body 11 and is connected to the wheel assembly 13 in a transmission mode. The steering assembly 15 is connected to suspension assembly 12 and is connected to the first wheel 131 by suspension assembly 12, thereby controlling the driving direction of the straddle type vehicle 100. The steering assembly 15 includes a steering handlebar 151. The general orientations of front, rear, up, and down for the straddle type vehicle 100 are defined in FIG. 1, and left and right are defined as riding on the vehicle looking forward.

As shown in FIG. 2, in one embodiment, a first portable device 300 of a user of the straddle type vehicle 100 is detachably mounted on the vehicle body 11. The straddle type vehicle 100 includes an anti-vibration bracket 16, which is at least partially arranged on the vehicle body 11 and is positioned on the front vehicle body 111 of the vehicle body 11. The first portable device 300 may be detachably mounted on the straddle type vehicle 100 by the anti-vibration bracket 16. Furthermore, the anti-vibration bracket 16 is provided with a shock-absorbing component (not shown in the FIGS.) so as to achieve the anti-vibration effect of the first portable device 300 during running, the anti-vibration bracket 16 may be an elastic component, for example, a spring or rubber. The shock-absorbing component may be an air damper. The vibration amplitude of the first portable device 300 is reduced by the shock-absorbing component, which makes it easier for the user to view the image information displayed by the first portable device 100 during running, thereby improving the accuracy of user touch operations on the first portable device 300.

Furthermore, the anti-vibration bracket 16 includes a mounting member 161 and a fixing member 162. The mounting member 161 is used to secure or mount the first portable device 300. The connection method between the mounting member 161 and the first portable device 300 may be by a snap fit, by magnetic interaction, or a combination thereof. One end of the fixing member 162 is connected to the vehicle body 11, and the other end of the fixing member 162 is provided with a rotating portion 1621. The mounting member 161 is rotatably connected to the fixing member 162 by the rotating portion 1621. Furthermore, in the case where the first portable device 300 is connected to the anti-vibration bracket 16, the first portable device 300 can be switched between a horizontal arrangement or a vertical arrangement by means of the mounting member 161 and the rotating portion 1621, so as to meet the driving preferences of users in different driving environments.

Optionally, the straddle type vehicle 100 is capable of transmitting signals to the first portable device 300. When the straddle type vehicle 100 is running, the straddle type vehicle 100 is capable of transmitting driving data to the first portable device 300, and the driving data is capable of being converted into instrument images for display on a display interface of the first portable device 300. Optionally, the first portable device 300 may be a mobile terminal or a tablet computer. It should be noted that the straddle type vehicle 100 includes a display screen 22 positioned at the front vehicle body 111 of the vehicle body 11. Compared to the display screen 22 of the straddle type vehicle 100, the first portable device 300 has more powerful image processing and display functions. The display effect of the instrument images has been optimized by replacing the display screen 22 of the straddle type vehicle 100 with the first portable device 300, the present invention enriches the user experience while reducing the hardware and software requirements of the straddle type vehicle 100, thereby reducing the cost of the straddle type vehicle 100.

The driving data includes vehicle information and vehicle control information. The vehicle information is selected from at least one of the group consisting of: current vehicle velocity, current vehicle gear, current vehicle temperature, remaining fuel volume, driving mode, and total mileage. When the straddle type vehicle 100 is a fuel powered vehicle, the current vehicle temperature is mainly the engine temperature of the straddle type vehicle 100, and the vehicle information further includes remaining oil volume, engine rotational speed. When the straddle type vehicle 100 is an electric driven vehicle, the current vehicle temperature mainly includes a battery temperature, a motor temperature, and motor controller temperature of the straddle type vehicle, and the vehicle information further includes information such as remaining power and motor rotational speed.

The vehicle control information can be generated based on the touch operation of the straddle type vehicle 100. The touch operation is selected from at least one of the group consisting of press operation, rotating operation, toggle operation, and stepping operation.

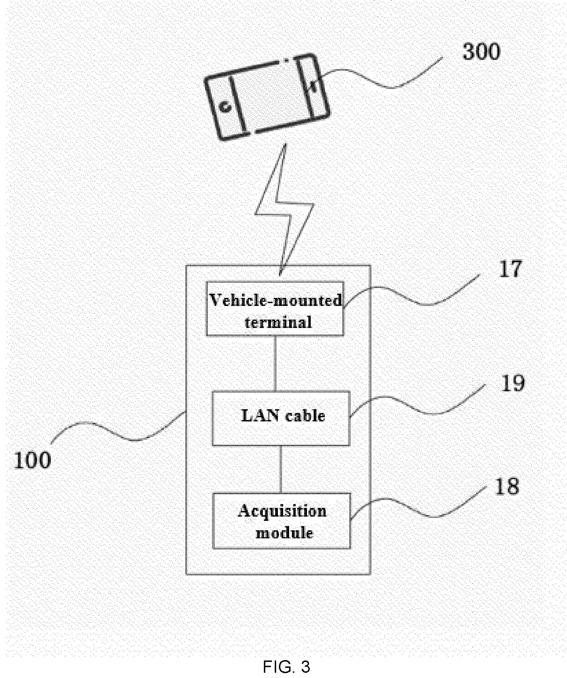

As shown in FIG. 3, in some embodiments, the straddle type vehicle 100 includes a vehicle-mounted terminal 17, and the straddle type vehicle 100 is capable of transmitting signals to the first portable device 300 by the vehicle-mounted terminal 17. The vehicle-mounted terminal 17 is capable of acquiring driving data of the straddle type vehicle 100 and is capable of transmitting the driving data to the first portable device 300. Furthermore, at least one acquisition module 18 is arranged on the straddle type vehicle 100, and the t least one acquisition module 18 is used to acquire driving data of the straddle type vehicle 100. Optionally, the acquisition module 18 is selected from one or more of the group consisting of: a Vehicle Control Unit (VCU), a Body Control Module (BCM), an Electrical Power Steering (EPS), a Steering Angle Sensor (SAS), an Electronic Parking Brake (EPB), an Electronic Stability Program (ESP), a Hybrid Control Unit (HCU), a Transmission Control Unit (TCU). The driving data acquired by the acquisition module 18 is processed in the first portable device 300, and the processing results are displayed on the instrument images, so the user of the straddle type vehicle 100 can timely understand the vehicle condition information, and in the event of a fault in the straddle type vehicle 100, the cause of the fault can be promptly eliminated, thereby reducing the maintenance cost of the straddle type vehicle 100.

The straddle type vehicle 100 further includes a local area network (LAN) cable 19, which is selected from at least one of the group consisting of: a CAN bus, a LIN bus, Flex Ray bus, MOST-bus, or in vehicle Ethernet bus. The vehicle-mounted terminal 17 is connected to the acquisition module 18 by the local area network cable 19, so that the vehicle-mounted terminal 17 is capable of acquiring driving data by the local area network cable 19 and transmitting the acquired driving data to the first portable device 300.

As shown in FIG. 2, in one embodiment, the steering handlebar 151 is provided with a hand control member 1511. The hand control member 1511 is selected from at least one of the group consisting of: a button, a knob, and a toggle key. Furthermore, the hand control member 1511 is connected to the vehicle-mounted terminal 17. When the hand control member 1511 outputs control command, the vehicle-mounted terminal 17 is capable of transmitting the control command to the first portable device 300 to control first portable device 300 to perform corresponding display in response to the control command.

In terms of functionality, the hand control member 1511 is selected from at least one of the group consisting of: an illumination button, a steering button, and a light selection button. The control command is sent to the first portable device 300 by triggering the hand control member 1511, and the first portable device 300 displays the corresponding vehicle control information on the display interface in response to the control command.

As shown in FIG. 2, the straddle type vehicle 100 includes a control pedal 21, and the vehicle control information may be generated based on the stepping operation on the control pedal 21. The control pedal 21 may be arranged in the foot area of straddle type vehicle 100, and the user can step on the front and rear ends of control pedal 21 with different stepping forces to generate different vehicle control information.

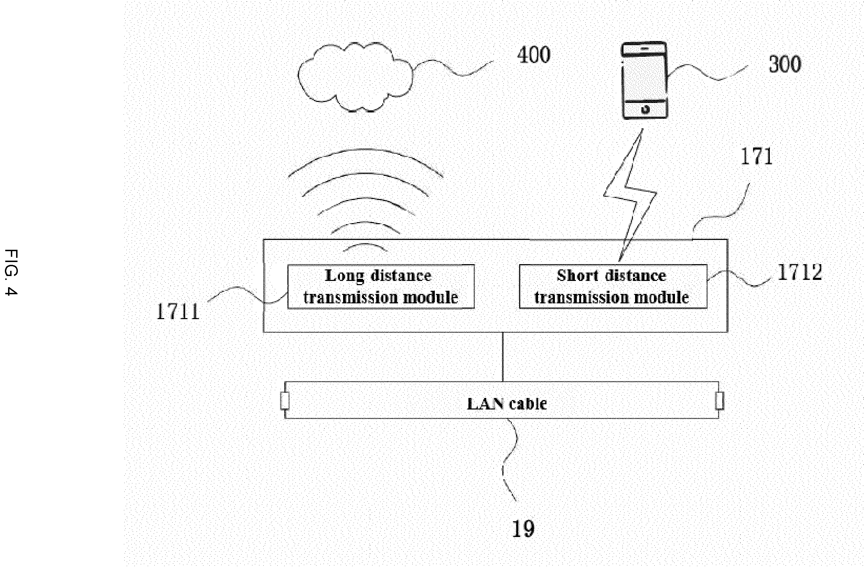

As shown in FIG. 4, Optionally, the vehicle-mounted terminal 17 includes a communication module 171 capable of transmitting signals to the first portable device 300. Furthermore, the communication module 171 is connected to the LAN cable 19 to enable the communication module 171 to acquire driving data from the local area network cable 19 and to transmit the driving data to the first portable device 300.

Optionally, the communication module 171 includes a long-distance transmission module 1711 and a short distance transmission module 1712. The long-distance transmission module 1711 is selected from at least one of the group consisting of: a 3G module, a 4G module, and a 5G module. The short distance transmission module 1712 is selected from at least one of the group consisting of: a Bluetooth communication module, a ZigBee communication module, a Wi-Fi communication module, an ultra-wideband (UWB) communication module, a radio frequency communication module, and an infrared communication module. Furthermore, the straddle type vehicle 100 is capable of transmitting driving data to the first portable device 300 via either or both of the long-distance transmission module 1711 and the short distance transmission module 1712.

When the vehicle-mounted terminal 17 transmits information to the first portable device 300 via the long-distance transmission module 1711, the transmission distance between the straddle type vehicle 100 and the first portable device 300 is increased, and the convenience of information transmission is enhanced.

When the vehicle-mounted terminal 17 transmits information to the first portable device 300 via the short distance transmission module 1712, it reduces the flow consumption during information transmission between the straddle type vehicle 100 and the first portable device 300, thereby reducing the operating cost of the straddle type vehicle 100.

In this application, the connection method between the straddle type vehicle 100 and the first portable device 300 may be automatically switched based on the distance between the straddle type vehicle 100 and the first portable device 300. When the straddle type vehicle 100 and the first portable device 300 are within a preset distance, signal transmission is carried out between the straddle type vehicle 100 and the first portable device 300 via the short distance transmission module 1712, thereby reducing the usage cost of the straddle type vehicle 100. Furthermore, when the first portable device 300 and the straddle type vehicle 100 are outside the preset distance, the first portable device 300 and the straddle type vehicle 100 are connected via the long-distance transmission module 1711, thereby avoiding information transmission interruption between the first portable device 300 and the straddle type vehicle 100, thereby enabling the user to observe the current vehicle status of the straddle type vehicle 100 in real time and improving the user driving experience. The preset distance is less than or equal to the maximum distance that the short distance transmission module 1712 can transmit and receive signals.

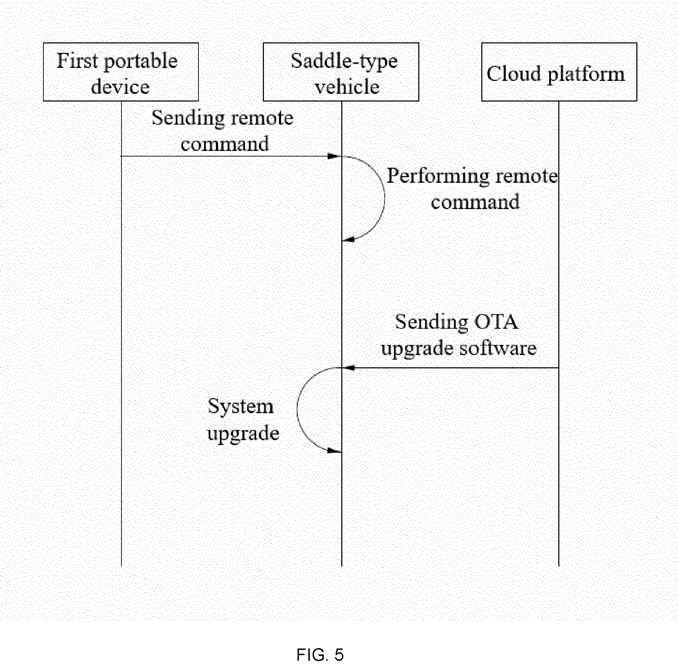

As shown in FIG. 4 and FIG. 5, when the communication module 171 includes a long-distance transmission module 1711, the straddle type vehicle 100 can exchange information with the cloud platform 400 via the long-distance transmission module 1711. The straddle type vehicle 100 is capable of receiving OTA upgrade software sent by the cloud platform 400, so that the straddle type vehicle 100 is capable of performing system upgrades based on the received OTA upgrade software, thereby optimizing the user driving experience. The cloud platform 400 may be a single server, a cluster of multiple servers, or a cloud computing service center.

Optionally, the straddle type vehicle 100 is capable of receiving remote command sent by the first portable device 300 via the long-distance transmission module 1711, thereby enabling the user to remotely control the straddle type vehicle 100 beyond a preset distance. The remote command is selected from at least one of the group consisting of vehicle locking command, vehicle unlocking command, and anti-theft command. Furthermore, the straddle type vehicle 100 is further capable of receiving remote command sent by the first portable device 300 via the short distance transmission module 1712, and the remote command is selected from at least one of the group consisting of vehicle locking command, vehicle unlocking command, and anti-theft command.

In addition, the straddle type vehicle 100 is further capable of the vehicle search command sent by the first portable device 300. When the first portable device 300 sends the vehicle search command, the straddle type vehicle 100 is capable of sending the current vehicle position to the first portable device 100, so that the first portable device 300 can display the search path based on the current vehicle position, so as to enhance the convenience of user searching for the vehicle and enhance their driving experience. The search path of the vehicle search command depends on the distance between the first portable device 300 and the straddle type vehicle 100. Within the signal transmission range of the short distance transmission module 1712, the straddle type vehicle 100 establishes a signal transmission channel with the first portable device 300 via the short distance transmission module 1712, so that the straddle type vehicle 100 receives the search command sent by the first portable device 300. When the first portable device 300 is outside the signal transmission range of the short distance transmission module 1712, the straddle type vehicle 100 establishes a signal transmission channel with the first portable device 300 via the long distance transmission module 1711, so that the straddle type vehicle 100 receives the search command sent by the first portable 300.

It should be noted that a dual protocol signal transmission channel including a long-distance transmission module 1711 and a short distance transmission module 1712 reduces the traffic cost of the straddle type vehicle 100 during signal transmission while ensuring signal transmission reliability.

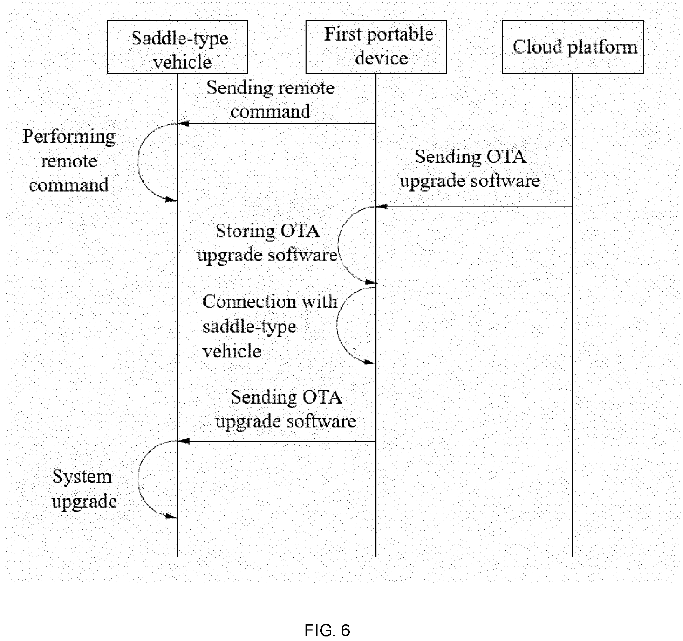

As shown in FIG. 6, optionally, the communication module 171 is a short distance transmission module 1712, and the straddle type vehicle 100 transmits signals to the first portable device 300 via the short distance transmission module 1712. The straddle type vehicle 100 is capable of obtaining OTA upgrade software from the cloud platform 400 by the first portable device 300. It should be noted that due to the signal transmission distance limitation of the short distance transmission module 1712, when the straddle type vehicle 100 is disconnected from the first portable device 300, the OTA upgrade software obtained from the cloud platform 400 can be stored in the first portable device 300. When the straddle type vehicle 100 is re-connected to the first portable device 300, the straddle type vehicle 100 is capable of obtaining the OTA upgrade software from the first portable device 300 via the short distance transmission module and is capable of upgrading and optimizing based on the OTA upgrade software.

In addition, when the communication module 171 is the short distance transmission module 1712, the driving data of the straddle type vehicle 100 is capable of being analyzed on the cloud platform 400. The driving data of the straddle type vehicle 100 is capable of being transmitted to the first portable device 300 via the short distance transmission module 1712. It should be noted that the first portable device 300 and the cloud platform 400 can transmit signals by the mobile Internet. The first portable device 300 uploads the acquired driving data to the cloud platform 400 for data analysis based on the driving data of the straddle type vehicle 100. Thus, the traffic cost of signal transmission for the straddle type vehicle 100 is eliminated, and the operating cost of the straddle type vehicle 100 is reduced.

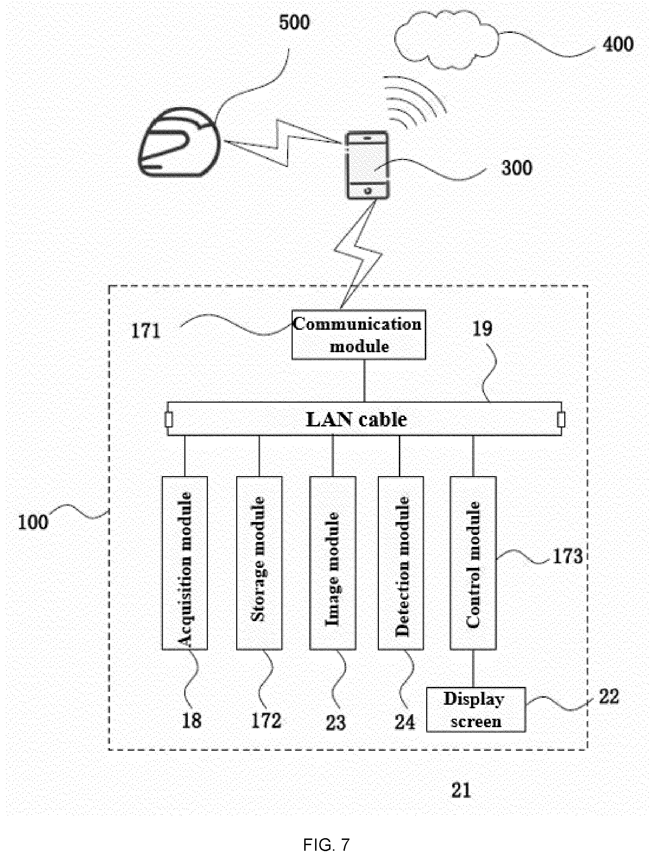

As shown in FIG. 7, in this embodiment, the vehicle-mounted terminal 17 further includes a storage module 172 including but not limited to Hard Disk Drive (HDD), Floppy Disk Drive, Solid State Drive (SSD), Flash Memory, Optical Disk, Magneto Optical Disk, Magnetic Tape or Universal Serial Bus (USB) drive, or a combination thereof.

The storage module 172 includes removable or non-removable (or fixed) media. When appropriate, the storage module 172 may be positioned inside or outside the vehicle-mounted terminal 17. In some embodiments, the storage module 172 is a nonvolatile storage module 172. In some embodiments, the storage module 172 includes a Read Only Memory (ROM) and a Random Access Memory (RAM). When appropriate, the ROM may be selected from Mask Programmed ROM, Programmable Read Only Memory (PROM), Erasable Programmable Read Only Memory (EPROM), Electrically Erasable Programmable Read Only Memory (EEPROM), Electrically Alterable Read Only Memory (EAROM), or Flash Memory (FLASH), or a combination thereof. When appropriate, the RAM may be Static Random-Access Memory (SRAM) or Dynamic Random Access Memory (DRAM), and the DRAM is selected from Fast Page Mode Dynamic Random Access Memory (FPMDRAM), Extended Date Out Dynamic Random Access Memory (EDODRAM), and Synchronous Dynamic Random-Access Memory (SDRAM).

The storage module 172 is connected to the local area network cable 19 to enable the storage module 172 to be connected to the short distance transmission module 1712 by the local area network cable 19. When the short distance transmission module 1712 is disconnected from the first portable device 300, the driving data acquired by the acquisition module 18 is capable of being stored in the storage module 172. When the vehicle-mounted terminal 17 is re-connected to the first portable device 300 via the short distance transmission module 1712, the driving data in the storage module 172 is capable of being transmitted to the first portable device 300 via the short distance transmission module 1712.

It should be noted that in some cost-sensitive vehicles, the present invention allows the hardware and software requirements of the straddle type vehicle 100to be reduced. The storage module 172 can store driving data to ensure the integrity of driving data for the straddle type vehicle 100. The signal transmission between the straddle type vehicle 100 and the first portable device 300 is achieved by the combination of storage module 172 and short distance transmission module 1712, thereby reducing the traffic cost of the straddle type vehicle 100 during the signal transmission process and lowering the usage cost of the straddle type vehicle 100.

Optionally, when the vehicle-mounted terminal 17 transmits driving data to the first portable device 300, the first portable device 300 is capable of establishing a driving log based on the received driving data, and the first portable device 300 is capable of storing the driving log locally, or the first portable device 300 is capable of transmitting the driving log to the cloud platform 400. The historical driving data of the straddle type vehicle 100 is recorded, which improves the maintenance efficiency of the straddle type vehicle 100 and reduces the maintenance cost of the straddle type vehicle 100.

The driving data of the straddle type vehicle 100 is sent to the first portable device 300 by the communication module 171, so that the first portable device 300 can diagnose the straddle type vehicle 100 in response to the driving data, and the diagnostic information is displayed on the first portable device 300. In addition, the first portable device 300 is further capable of reading diagnostic information of the straddle type vehicle 100, which includes checking the vehicle fault code, the manufacturer of the vehicle controller, and driving data when a fault occurs. When a fault occurs in the straddle type vehicle 100, the diagnostic information enables the user to make more accurate judgments on the fault cause in the straddle type vehicle 100.

Furthermore, the first portable device 300 is capable of diagnosing the straddle type vehicle 100 based on driving data, and the diagnostic content may include but not limited to safety diagnosis of the straddle type vehicle 100, such as detection and diagnosis of the braking performance, steering performance, lighting performance the straddle type vehicle 100 and the like. The diagnostic content may further include a reliability diagnosis of the straddle type vehicle 100, such as abnormal noise, wear, deformation, and the like. The diagnostic content further includes a power diagnosis of the straddle type vehicle 100, such as acceleration ability, engine power, and power circuit performance, and the like. The diagnostic content may further include a environmental diagnosis, such as noise and exhaust emissions of the straddle type vehicle 100. It is possible to promptly alert the user when a fault occurs in the straddle type vehicle 100, so that the user can carry out subsequent maintenance, repair, and other operations, thereby ensuring that the straddle type vehicle 100 operates in good condition and improving the safety performance of the vehicle.

Optionally, after the first portable device 300 diagnoses the straddle type vehicle 100 according to the driving data, it can also upload the driving data and diagnostic information to the cloud platform 400 by the mobile Internet. The cloud platform 400 analyzes and processes the driving data and diagnostic information and stores them in the server of the cloud platform 400. The server of cloud platform 400 is capable of performing a deeper analysis and processing of driving data and storing driving data in cloud platform 400 for subsequent calls, thereby improving the efficiency of driving data utilization and the accuracy of diagnosing driving data.

In one embodiment, when the straddle type vehicle 100 is started, the communication module 171 is capable of sending a startup command to the first portable device 300. The first portable device 300 is capable of activating its display function of the instrument image in response to a startup command sent by the communication module 171. The first portable device 300 is capable of automatically displaying instrument images when the straddle type vehicle 100 starts, thereby improving the user driving experience.

Additionally or alternatively, when the communication module 171 is connected to the first portable device 300, if the display function of the instrument image is not activated by the first portable device 300 when the straddle type vehicle 100 is started. The first portable device 300 is capable of receiving control command sent by the hand control member 1511 to enable the display function of the instrument image in response to the control command.

As shown in FIG. 7, optionally, the straddle type vehicle 100 includes a display screen 22 arranged on the front 111 of the vehicle body 11. The display screen 22 is connected to the local area network cable 19, when the first portable device 300 does not display the instrument images, the display screen 22 is capable of easily displaying the instrument images converted from driving data. The instrument images displayed on display screen 22 may be at least one of current vehicle speed and corresponding vehicle control information. When the straddle type vehicle 100 is a fuel powered vehicle, the instrument image displayed on the display screen 22 further includes engine rotational speed and engine temperature. When the straddle type vehicle 100 is an electric vehicle, the instrument image displayed on the display screen 22 further includes remaining battery level.

As shown in FIG. 7, optionally, the vehicle-mounted terminal 17 further includes a control module 173, which is connected to the acquisition module 18. The control module 173 is further connected to the display screen 22 in addition to being connected to the acquisition module 18. When the first portable device 300 does not display the instrument image of the straddle type vehicle 100, in order to enable the user to obtain the current driving data of the straddle type vehicle 100, the driving data acquired by the acquisition module 18 is processed by the control module 173, so that the driving data acquired by the acquisition module 18 is capable of being converted into the instrument image for the user to observe during the running process of the straddle type vehicle 100. Furthermore, the control module 173 may be a Vehicle Control Unit (VCU) or a Body Control Module (BCM). In addition, the control module 173 may be independently of the VCU or BCM. The control module 173 is only used for data processing of driving data, converting driving data into the instrument image, and displaying the instrument images on the display screen 22.

Compared to most of existing straddle type vehicles, in order to achieve the display of complex functions on the display screen 22, at least one control module 173 needs to be mounted in the vehicle-mounted terminal 17 to optimize the processing ability and effectiveness of driving data, or the display effect of the display screen 22 can be improved by adding electrical components to the straddle type vehicle 100. However, in the present invention, the display screen 22 is only used for simple display of the instrument images, thereby the production cost of the straddle type vehicle 100 can be reduced. The first portable device 300 is used to replace at least some of the function of the prior art display screen 22, thereby optimizes the visual effect of the instrument images. The smoothness of user operation is improved by the first portable device 300, thereby enhancing the user driving experience.

Optionally, the first portable device 300 is capable of storing an application program for executing corresponding navigation functions when running the application program, and the navigation image that executes the navigation function can display driving data.

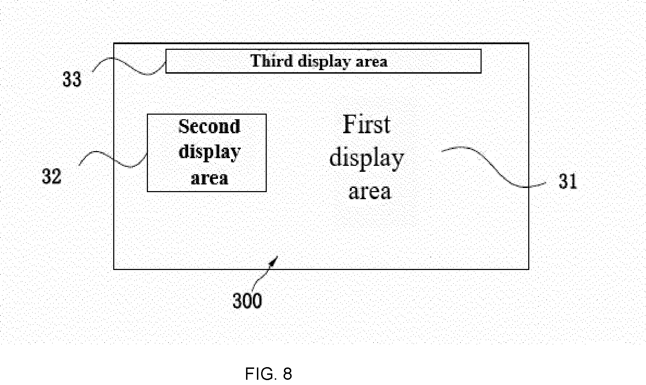

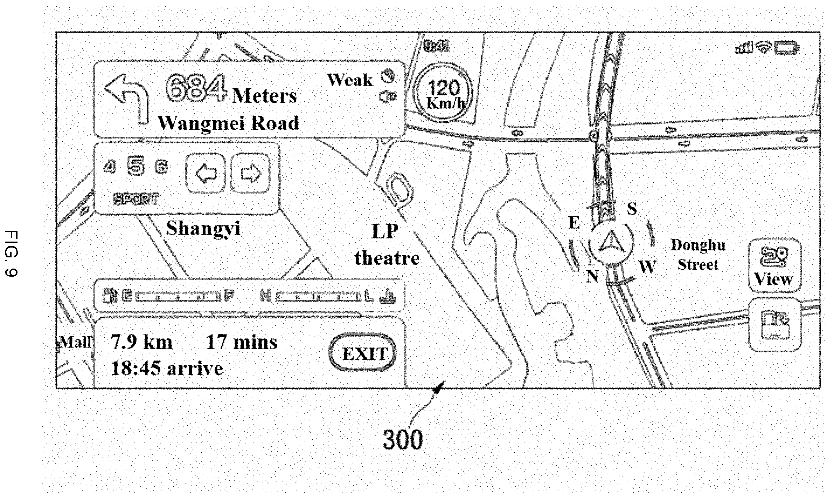

As shown in FIG. 8 and FIG. 9, the display interface of the first portable device 300 for performing navigation functions includes a first display area 31 and a second display area 32. The first display area 31 is larger than the second display area 32. The first display area 31 is used to display navigation images, and the second display area 32 is used to display driving data to enable the user to simultaneously obtain navigation images and driving data of the straddle type vehicle 100 without switching the display screen of the first portable device 300 while the straddle type vehicle 100 is running. Therefore, the user driving experience is optimized while reducing the production cost of the straddle type vehicle 100. In addition, the display interface of the first portable device 300 further includes a third display area 33, which is used to display the self-information of the first portable device 300, such as time, battery level, signal situation, and the like. The third display area 33 is smaller than the second display area 32. The third display area 33 is positioned at the top of the display interface of the first portable device 300, which is conducive to improving the layout space utilization of the display interface of the first portable device 300, and thus facilitating the display of the main information of the straddle type vehicle 100.

The first display area 31 can display the current position, current speed, time and distance of the vehicle from the destination, and the like. The second display area 32 can display the vehicle turn signal status, gear information, operating mode, and vehicle endurance information. It should be noted that when the vehicle is a fuel powered vehicle, the vehicle endurance information refers to the remaining fuel level in the vehicle. When the vehicle is an electric vehicle, the vehicle endurance information refers to the remaining battery capacity of the vehicle. When the vehicle is a hybrid vehicle, the endurance information of the vehicle refers to the remaining fuel and/or battery capacity of the vehicle. The third display area 33 can display the current remaining power, signal strength, current time of the first portable device 300 and the like.

In addition, the first portable device 300 further includes an entertainment function image and a voice call image. The user can send a control command to the first portable device 300 by the hand control member 1511 to enable the first portable device 300 to switch between the instrument image, the navigation image, the entertainment function image, and the voice call image in response to the control command. During the running process of the straddle type vehicle 100, it can reduce user touch operations on the first portable device 300. The display interface of the first portable device 300 can be switched by operating the touch operations of the hand control member 1511, thereby improving the safety of the straddle type vehicle 100 during the running process.

As shown in FIG. 7, the straddle type vehicle 100 further includes an image acquisition module 23 including at least one camera. The image acquisition module 23 is used for obtaining environmental information around the straddle type vehicle 100. The image acquisition module 23 is connected to the communication module 171. The image acquisition module 23 is capable of transmitting the obtained environmental information to the communication module 171 by the local area network cable 19. The communication module 171 is capable of transmitting the environmental information to the first portable device 300 and displaying the environmental information on the navigation image of the first portable device 300. The first portable device 300 is capable of performing augmented reality (AR) navigation based on environmental information. The AR navigation includes at least lane guidance, driving distance display, obstacle recognition, and the like. The ability to obtain environmental information of the straddle type vehicle 100 during running is enhanced. Compared to flat navigation images, the content displayed in AR navigation is richer and closer to reality.

One camera should be at least partially oriented forward with respect to the straddle type vehicle 100. During driving of the straddle type vehicle 100, a driving screen of the straddle type vehicle 100 is recorded by the forwardly-oriented camera. The driving screen is capable of being transmitted to the first portable device 300 by the communication module 171 and displaying on the interface of the first portable device 300. Further, the driving screen recorded by the forwardly-oriented camera is capable of being stored locally on the first portable device 300 or uploaded to the cloud platform 400 for storage by the first portable device 300, so as to ensure the completeness of the driving image data. In the case of a crash of the straddle type vehicle 100, this helps avoid data loss in the driving screen, thereby improving the user driving experience.

Optionally, one or a plurality of cameras are at least partially oriented rearward with respect to the straddle type vehicle 100 for acquiring image information from the rear end of the straddle type vehicle 100. The straddle type vehicle 100 further includes two rear-view mirrors positioned on left and right sides of the vehicle body 11, with a camera mounted on each rear-view mirror. Optionally, the cameras may be positioned at the rear vehicle body 112 of the vehicle body 11 and positioned on the left and right sides of the vehicle body 11, so as to avoid blocking of camera view by the user's limbs during running.

When the user triggers the hand control member 1511 to turn on the turn signal lamps of the straddle type vehicle 100, the camera oriented rearward with respect to the straddle type vehicle 100 starts to acquire image information from the rear of the straddle type vehicle 100. The image information is transmitted to the first portable device 300 by the communication module 171, and the first portable device 300 displays the image information on the display interface. The turn signal lamps includes a left turn signal lamp and a right turn signal lamp. When the user triggers the hand control member 1511 to turn on the left turn signal lamp, the camera arranged on the left side of the straddle type vehicle 100 starts and acquires image information, and the first portable device 300 displays the image information on the left side of the straddle type vehicle 100. It should be noted that when the user triggers the hand control member 1511 to turn on the right turn signal lamp, the camera arranged on the right side of the straddle type vehicle 100 starts and acquires image information, and the first portable device 300 displays the image information on the right side of the straddle type vehicle 100. Therefore, the blind spot detection function of the straddle type vehicle 100 is achieved, which improves driving safety.

Optionally, in the event that the user triggers the left turn signal lamp or the right turn signal lamp, the cameras arranged both sides of the straddle type vehicle 100 can simultaneously start and acquire image information, and the display interface of the first portable device 300 displays the image information on both sides of the straddle type vehicle 100, so as to reduce the blind spots in the user's field of vision during driving.

As shown in FIG. 7, in some embodiments, the straddle type vehicle 100 further includes a detection module connected to the communication module. The detection module 24 may be selected from at least one of the group consisting of: infrared radar, millimeter wave radar, and ultrasonic radar. The detection module 24 is mounted on the front vehicle body 111 of the vehicle body 11, and a detection direction of the detection module 24 is oriented forward with respect to the straddle type vehicle 100. Optionally, the detection module 24 is mounted on the rear vehicle body 112 of the vehicle body 11, and a detection direction of the detection module 24 is oriented rearwards with respect to the straddle type vehicle 100.

Furthermore, during running, a current distance between obstacles and the front edge of the straddle type vehicle 100 is detected by the detection module 24, or a current distance between obstacles and the rear edge of the straddle type vehicle 100 is detected by the detection module 24. The detection module 24 uses the current distance as a detection signal and outputs a detection signal to the first portable device 300 by the communication module 171. The first portable device 300 displays collision detection in response to the detection signal. The first portable device 300 generates a warning information based on the current distance between the straddle type vehicle 100 and obstacles. The first portable device 300 stores a preset distance threshold for representing the distance between the straddle type vehicle 100 and the obstacle. If the current distance is less than or equal to the preset distance threshold, the first portable device 300 generates the warning information. The warning information includes at least one of: a sound warning, a vibration warning, and an image warning.

In summary, AR navigation, blind spot detection, and collision detection of the straddle type vehicle 100 are achieved by the image acquisition module 23 and detection module 24. The image acquisition module 23 and detection module 24 are only used to acquire environmental information around the straddle type vehicle 100, and there is no need to process the environmental information. Instead, the image acquisition module 23 and detection module 24 both transmit environmental information to the first portable device 300 by the communication module 171, and process data by the first portable device 300 to achieve more reliable data processing results.

Optionally, the detection module 24 is integrated with a controller (not shown in the FIGS.) for processing the detection signal. The straddle type vehicle 100 is capable of transmitting the processed detection signal to the first portable device 300, which performs collision detection in response to the detection signal. In some embodiments, when the distance between the straddle type vehicle 100 and the obstacle is less than the preset distance threshold, the detection module 24 transmits the detection signal to the first portable device 300 by the communication module 171 and displays the warning information on the display interface of the first portable device 300.

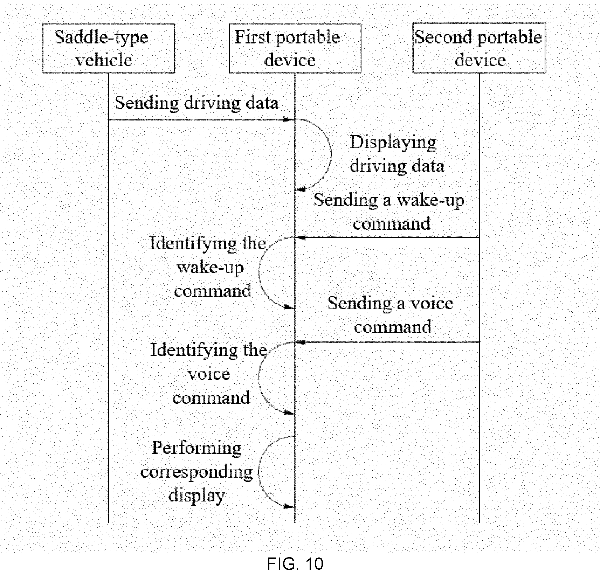

As shown in FIG. 7 and FIG. 10, in one embodiment, the first portable device 300 is capable of transmitting signals to the second portable device 500, which may be at least one of Bluetooth helmets or Bluetooth earphones. In addition, the second portable device 500 is mainly an audio receiving device, and the type of audio receiving device is not limited to the aforementioned Bluetooth helmet or Bluetooth earphone. Any audio receiving device capable of receiving user voice command is within the scope required by the present application.

When the voice interaction of the first portable device 300 is enabled, a voice command of the user is capable of being transmitted to the first portable device 300 by the second portable device 500, and the first portable device 300 is capable of being controlled to perform a corresponding display by the voice command. The convenience of the user operation of the first portable device 300 is improved, and the driving safety is enhanced during the running process.

Optionally, the first portable device 300 is capable of communicating with the cloud platform 400, and/or a semantic data module is provided on the first portable device 300. When the voice command is transmitted to the first portable device 300, the first portable device 300 is capable of recognizing the voice command by the cloud platform 400 and/or semantic data module to enable the first portable device 300 to perform the corresponding display. The cloud platform 400 and/or semantic data module are equipped with semantic databases for recognizing voice commands. The semantic database of cloud platform 400 is an on-line database, and the semantic database of the semantic data module may be an on-line database and/or a local database. When the straddle type vehicle 100 is located in an area with good signal, voice commands are capable of being recognized by the cloud platform 400 and/or semantic data module, thereby controlling the first portable device 300 to perform the corresponding display.

In addition, when the straddle type vehicle 100 is located in an area with poor signal, voice commands are capable of being recognized by the local database of the semantic data module to control the first portable device 300 to perform corresponding display, thereby meeting the voice control requirements of the straddle type vehicle 100 in different situations and improving its voice control and human-machine interaction capabilities.

Optionally, the voice interaction function of the first portable device 300 includes a first wake-up method and a second wake-up method. The voice command includes a wake-up command. When the first portable device 300 receives the wake-up command by the second portable device 500, the first portable device 300 compares the wake-up command with the wake-up commands within the networked database and/or local database. If the wake-up command comparison is successful, the first portable device 300 will respond to the wake-up command and activate the voice interaction function. Furthermore, the first portable device 300 is further capable of recognizing voice command sent by the user other than wake-up command, thereby achieving the possibility of voice operations.

In the second wake-up method, the hand control member 1511 sends a wake-up command to the first portable device 300 based on the corresponding touch operation, and the first portable device 300 responds to the wake-up command to activate voice interaction function. Furthermore, if the hand control member 1511 is a button, the button sends a wake-up command to the first portable device 300 based on at least one of the following press operations. The press operation includes a first time length press and a time length press, where the time length press is less than the second time length press. When the press operation is the first time length press, the voice interaction function of the first portable device 300 is activated, thereby reducing the difficulty of operation and achieving instant on/off of the voice interaction function. When the press operation is the second time length press, the voice interaction function of the first portable device 300 is activated to avoid accidental touch of the hand control member 1511 by the user during the running of the straddle type vehicle 100, which may cause the voice interaction to activate unintentionally.

In addition, the press operation of the hand control member 1511 may be at least two consecutive presses to enable the voice interaction function of the first portable device 300, thereby avoiding the accidental touch of the hand control member 1511 by the user during the running of the straddle type vehicle 100, thereby improving driving safety.

Some complex data processing functions on the vehicle-mounted terminal 17 of the straddle type vehicle 100 are removed, and the vehicle-mounted terminal 17 can only perform simple data processing based on the driving data acquired by the acquisition module 18 and make a simple display on the display screen 22, so the software and hardware requirements for the straddle type vehicle 100 are reduced, thereby lowering the production cost of the straddle type vehicle 100. In the present application, the straddle type vehicle 100 replaces the display screen 22 with the first portable device 300 to perform an instrument image display function. The data processing capability of the straddle type vehicle 100 is improved by processing the driving data on the first portable device 300, and compared to the instrument image displayed on the display screen 22, the first portable device 300 has more comprehensive functions and richer visual effects, which reduces the cost of the straddle type vehicle 100 and improves user driving experience.

In addition, in the cost-sensitive vehicles, the removal of the long-distance transmission module 1711 can reduce the traffic cost generated via the long-distance transmission module 1711, thereby reducing the operating cost of the straddle type vehicle 100.

Numerous other minor modifications, embodiments and/or improvements can be devised by those skilled in the art which fall within the scope and spirit of the principles of this invention.

## Claims

1. A straddle type vehicle comprising
a vehicle body where a first portable device of a user of the straddle type vehicle is detachably mounted;
a suspension assembly connected to the vehicle body;
a wheel assembly connected to the vehicle body by the suspension assembly;
a power assembly connected to the wheel assembly in a transmission mode;
a steering assembly for controlling a driving direction of the straddle type vehicle, the steering assembly connected to the wheel assembly by the suspension assembly and comprising a steering handlebar;
a vehicle-mounted terminal capable of transmitting signals to the first portable device;
at least one acquisition module capable of acquiring driving data of the straddle type vehicle; and
a local area network (LAN) cable, the vehicle-mounted terminal being connected to the acquisition module by the local area network (LAN) cable;
wherein, during the running of the straddle type vehicle, the vehicle-mounted terminal is capable of transmitting the acquired driving data to the first portable device, and the driving data is capable of being converted into one or a plurality of instrument images for display on a display interface of the first portable device.

2. The straddle type vehicle of claim 1, wherein the vehicle-mounted terminal comprises a communication module connected to the local area network (LAN) cable, the communication module is capable of transmitting signals to the first portable device, and is capable of acquiring the driving data from the LAN cable and transmitting the driving data to the first portable device.

3. The straddle type vehicle of claim 2, wherein the communication module comprises a short distance transmission module and a long distance transmission module, and the straddle type vehicle is capable of transmitting the driving data to the first portable device via the short distance transmission module and the long distance transmission module.

4. The straddle type vehicle of claim 3, wherein the straddle type vehicle is capable of performing information interaction with a cloud platform via the long distance transmission module, and the straddle type vehicle is capable of receiving an over-the-air (OTA) upgrade software sent by the cloud platform via the long distance transmission module.

5. The straddle type vehicle of claim 3, wherein the straddle type vehicle is capable of receiving a remote command sent by the first portable device via the long distance transmission module, and the remote command being selected from at least one of the group consisting of a vehicle locking command, a vehicle unlocking command, and an anti-theft command; and wherein the straddle type vehicle is further capable of receiving the vehicle locking command, the vehicle unlocking command, or the anti-theft command sent by the first portable device via the short distance transmission module.

6. The straddle type vehicle of claim 2, wherein the communication module is a short distance transmission module selected from the group consisting of: a Bluetooth communication module, a ZigBee communication module, a Wi-Fi communication module, an ultra-wideband (UWB) communication module, a radio frequency communication module, and an infrared communication module.

7. The straddle type vehicle of claim 6, wherein the straddle type vehicle is capable of performing information interaction with a cloud platform via the first portable device, the first portable device is capable of receiving OTA upgrade software sent by the cloud platform; when the vehicle-mounted terminal is disconnected from the first portable device, the first portable device is capable of storing the OTA upgrade software; when the vehicle-mounted terminal is re-connected to the first portable device, the straddle type vehicle is capable of obtaining the OTA upgrade software from the first portable device via the short distance transmission module and is capable of upgrading based on the OTA upgrade software.

8. The straddle type vehicle of claim 6, wherein the vehicle-mounted terminal further comprises a storage module connected to the short distance transmission module, when the vehicle-mounted terminal is disconnected from the first portable device, the storage module is capable of storing the driving data, and when the vehicle-mounted terminal is re-connected to the first portable device, the storage module is capable of transmitting the stored driving data to the first portable device via the short distance transmission module.

9. The straddle type vehicle of claim 2, wherein the steering handlebar is provided with an hand control member selected from at least one of the group consisting of: a button, a knob, and a toggle key; the hand control member is connected to the communication module, and when the hand control member outputs a control command, the communication module is capable of transmitting the control command to the first portable device to control the first portable device to perform corresponding display.

10. The straddle type vehicle of claim 9, wherein the first portable device is built-in with an application program, and the first portable device is capable of executing navigation functions when running the application program, and the driving data is capable of being displayed on one or a plurality of navigation images for the navigation function.

11. The straddle type vehicle of claim 10, wherein the control command outputted by the hand control member is capable of controlling the first portable device to switch between the instrument images and the navigation images.

12. The straddle type vehicle of claim 10, wherein a display interface of the first portable device for executing the navigation function comprises a first display area for displaying navigation images and a second display area for displaying driving data, and an area occupied by the first display area is larger than an area occupied by the second display area.

13. The straddle type vehicle of claim 9, wherein when the straddle type vehicle is started, the communication module is capable of sending a startup command to the first portable device, and the vehicle-mounted terminal is capable of controlling the first portable device to display the instrument images by sending the startup command.

14. The straddle type vehicle of claim 13, wherein when the straddle type vehicle is started, if the first portable device does not display the instrument images, the first portable device is capable of being controlled to display the instrument images in response to an operation of the hand control member.

15. The straddle type vehicle of claim 1, further comprising a display screen connected to the LAN cable, when the first portable device does not display the instrument images, the driving data is capable of being converted into the instrument images of the straddle type vehicle for display on the display screen.

16. The straddle type vehicle of claim 15, wherein the vehicle-mounted terminal comprises a control module connected to the display screen, when the first portable device does not display the instrument images, the control module is capable of converting the driving data acquired by the acquisition module into the instrument images and controlling the display screen to display the instrument images.

17. The straddle type vehicle of claim 9, wherein the vehicle body comprises a front vehicle body and a rear vehicle body, with a saddle area defined between the front vehicle body and the rear vehicle body, the straddle type vehicle further comprises an anti-vibration bracket disposed on the front vehicle body, and the first portable device is detachably mounted on the front vehicle body by the anti-vibration bracket.

18. The straddle type vehicle of claim 17, wherein the anti-vibration bracket comprises a mounting member for mounting the first portable device and a fixing member, one end of the fixing member being fixedly connected to the vehicle body, the other end of the fixing member being provided with a rotating portion, and the mounting member is connected to the fixing member by the rotating portion to enable the first portable device to switch between a horizontal arrangement and a vertical arrangement by means of the rotating portion.

19. The straddle type vehicle of claim 17, further comprising an image acquisition module capable of acquiring environmental information around the straddle type vehicle and capable of transmitting the environmental information to the vehicle-mounted terminal, the image acquisition module comprises at least one camera; the vehicle-mounted terminal is capable of transmitting the environmental information to the first portable device to enable the first portable device to perform AR navigation based on the environmental information.

20. The straddle type vehicle of claim 19, wherein the camera is at least partially oriented rearward of the straddle type vehicle for acquiring image information on the rear side of the straddle type vehicle, when the hand control member sends a steering command, the image information acquired by the camera is capable of being displayed on the first portable device to enable blind spot detection.

21. The straddle type vehicle of claim 20, further comprising a plurality of rear-view mirrors arranged on left and right sides of the vehicle body, and the cameras are at least partially mounted on the rear-view mirrors; or the cameras are mounted at the rear of the vehicle body.

22. The straddle type vehicle of claim 17, further comprising a detection module selected from at least one of the group consisting of: infrared radar, millimeter wave radar, and ultrasonic radar; the vehicle-mounted terminal is used to send the detection signal of the detection module to the first portable device to enable collision detection in response to the detection signal.

23. The straddle type vehicle of claim 22, wherein the detection module is located at the front of the vehicle body and oriented forward of the straddle type vehicle.

24. The straddle type vehicle of claim 9, wherein when the straddle type vehicle is running, a voice command of the user of the straddle type vehicle is capable of being transmitted to the first portable device by a second portable device carried by the user, and the voice command is capable of controlling the first portable device to enable corresponding displays.

25. The straddle type vehicle of claim 24, wherein the voice command of the user of the straddle type vehicle is capable of being transmitted to the first portable device by the second portable device for awakening the voice interaction function of the first portable device.

26. The straddle type vehicle of claim 25, wherein the hand control member is capable of sending a wake-up command to the first portable device by one or a plurality of touch operations for awakening the voice interaction function, if the hand control member is a button, the button is capable of sending the wake-up command to the first portable device by at least one of the following operations: first time length press, second time length press, and the second time length is greater than the first time length.

27. The straddle type vehicle of claim 1, wherein the driving data is selected from at least one of the group consisting of: current vehicle velocity, current vehicle gear, current vehicle temperature, and remaining fuel volume.

28. A straddle type vehicle comprising
a vehicle body comprising a front vehicle body and a rear vehicle body, with a saddle area for a user to ride defined between the front vehicle body and the rear vehicle body;
a suspension assembly connected to the vehicle body;
a wheel assembly connected to the vehicle body by the suspension assembly;
a steering assembly for controlling a driving direction of the straddle type vehicle, the steering assembly comprising a steering handlebar;
a first portable device of a vehicle user is detachably mounted on the front vehicle body, and the straddle type vehicle is capable of transmitting signals with the first portable device, when the straddle type vehicle is running, the straddle type vehicle is capable of transmitting driving data to the first portable device, and the driving data is capable of being converted into instrument images for display on the display interface of the first portable device.

29. The straddle type vehicle of claim 28, further comprising a vehicle-mounted terminal capable of transmitting signals with the first portable device, the vehicle-mounted terminal is capable of acquiring driving data of the straddle type vehicle and is capable of transmitting the driving data to the first portable device.

30. The straddle type vehicle of claim 29, further comprising at least one acquisition module for acquiring driving data of the straddle type vehicle.

31. The straddle type vehicle of claim 30, further comprising a LAN cable, the vehicle-mounted terminal is connected to the acquisition module by the LAN cable, the vehicle-mounted terminal is capable of acquiring the driving data and is capable of transmitting the driving data to the first portable device.

32. The straddle type vehicle of claim 31, wherein the vehicle-mounted terminal comprises a communication module connected to the LAN cable, the communication module is capable of transmitting signals with the first portable device, and is capable of acquiring the driving data from the LAN cable and transmitting the driving data to the first portable device.

33. The straddle type vehicle of claim 32, wherein the communication module comprises a short distance transmission module and a long distance transmission module, and the straddle type vehicle is capable of transmitting the driving data to the first portable device via the short distance transmission module and the long distance transmission module.

34. The straddle type vehicle of claim 33, wherein the straddle type vehicle is capable of performing information interaction with a cloud platform via the long distance transmission module, and the straddle type vehicle is capable of receiving an OTA upgrade software sent by the cloud platform via the long distance transmission module.

35. The straddle type vehicle of claim 33, wherein the straddle type vehicle is capable of receiving a remote command sent by the first portable device via the long distance transmission module, and the remote command is selected from at least one of the group consisting of a vehicle locking command, a vehicle unlocking command, and an anti-theft command; the straddle type vehicle is further capable of receiving vehicle locking command, vehicle unlocking command, and anti-theft command sent by the first portable device via the short distance transmission module.

36. The straddle type vehicle of claim 32, wherein the communication module is a short distance transmission module selected from the group consisting of: a Bluetooth communication module, a ZigBee communication module, a Wi-Fi communication module, an ultra-wideband (UWB) communication module, a radio frequency communication module, and Infrared communication module.

37. The straddle type vehicle of claim 36, wherein the straddle type vehicle is capable of performing information interaction with the cloud platform by the first portable device, which is capable of receiving OTA upgrade software sent by the cloud platform; when the vehicle-mounted terminal is disconnected from the first portable device, the first portable device is capable of storing the OTA upgrade software; when the vehicle-mounted terminal is re-connected to the first portable device, the straddle type vehicle is capable of obtaining the OTA upgrade software from the first portable device via the short distance transmission module and is capable of upgrading based on the OTA upgrade software.

38. The straddle type vehicle of claim 36, wherein the vehicle-mounted terminal further comprises a storage module connected to the short distance transmission module, when the vehicle-mounted terminal is disconnected from the first portable device, the storage module is capable of storing the driving data, and when the vehicle-mounted terminal is re-connected to the first portable device, the storage module is capable of transmitting the stored driving data to the first portable device via the short distance transmission module.

39. The straddle type vehicle of claim 32, wherein the steering handlebar is provided with an hand control member selected from at least one of the group consisting of: a button, a knob, and a toggle key; the hand control member is connected to the communication module, and when the hand control member outputs a control command, the communication module is capable of transmitting the control command to the first portable device to control the first portable device to perform corresponding display.

40. The straddle type vehicle of claim 39, wherein the first portable device is built-in with an application program, and the first portable device is capable of executing navigation functions when running the application program, and the driving data is capable of being displayed on one or a plurality of navigation images for the navigation function.

41. The straddle type vehicle of claim 40, wherein the control command outputted by the hand control member is capable of controlling the first portable device to switch between the instrument images and the navigation images.

42. The straddle type vehicle of claim 40, wherein a display interface of the first portable device for executing the navigation function comprises a first display area for displaying the navigation images and a second display area for displaying the driving data, and an area occupied by the first display area is greater than an area occupied by the second display area.

43. The straddle type vehicle of claim 39, wherein when the straddle type vehicle is started, the communication module is capable of sending a startup command to the first portable device, and the vehicle-mounted terminal is capable of controlling the first portable device to display the instrument images by sending the startup command.

44. The straddle type vehicle of claim 43, wherein when the straddle type vehicle is started, if the first portable device does not display the instrument images, the first portable device is capable of being controlled to display the instrument images in response to an operation of the hand control member.

45. The straddle type vehicle of claim 31, further comprising a display screen connected to the LAN cable, when the first portable device does not display the instrument images, the driving data is capable of being converted into the instrument images of the straddle type vehicle for display on the display screen.

46. The straddle type vehicle of claim 45, wherein the vehicle-mounted terminal comprises a control module connected to the display screen, when the first portable device does not display the instrument images, the control module is capable of converting the driving data acquired by the acquisition module into the instrument images and controlling the display screen to display the instrument images.

47. The straddle type vehicle of claim 39, wherein the straddle type vehicle further comprises an anti-vibration bracket disposed on the front vehicle body, and the first portable device is detachably mounted on the front vehicle body by the anti-vibration bracket.

48. The straddle type vehicle of claim 47, wherein the anti-vibration bracket comprises a mounting member for mounting the first portable device and a fixing member, one end of the fixing member is fixedly connected to the vehicle body, the other end of the fixing member is provided with a rotating portion, and the mounting member is connected to the fixing member by the rotating portion to enable the first portable device to switch between a horizontal arrangement and a vertical arrangement by means of the rotating portion.

49. The straddle type vehicle of claim 39, wherein an image acquisition module capable of acquiring environmental information around the straddle type vehicle and capable of transmitting the environmental information to the vehicle-mounted terminal, the image acquisition module comprises at least one camera; the vehicle-mounted terminal is capable of transmitting the environmental information to the first portable device to enable the first portable device to perform AR navigation based on the environmental information.

50. The straddle type vehicle of claim 49, wherein the camera is at least partially oriented towards the rear side of the straddle type vehicle for acquiring image information on the rear side of the straddle type vehicle, when the hand control member sends a steering command, the image information acquired by the camera is capable of being displayed on the first portable device to enable blind spot detection.

51. The straddle type vehicle of claim 29, wherein a detection module selected from at least one of the group consisting of: an infrared radar, a millimeter wave radar, and a ultrasonic radar; the vehicle-mounted terminal is used to send the detection signal of the detection module to the first portable device to enable collision detection in response to the detection signal.

52. The straddle type vehicle of claim 39, wherein when the straddle type vehicle is running, the voice command of the user of the straddle type vehicle is capable of being transmitted to the first portable device by a second portable device carried by the user, and the voice command is capable of controlling the first portable device to enable corresponding displays.

53. The straddle type vehicle of claim 52, wherein the voice command of the user of the straddle type vehicle is capable of being transmitted to the first portable device by the second portable device for awakening the voice interaction function of the first portable device.

54. The straddle type vehicle of claim 53, wherein the hand control member is capable of sending a wake-up command to the first portable device by one or a plurality of touch operations for awakening the voice interaction function, if the hand control member is a button, the button is capable of sending the wake-up command to the first portable device by at least one of the following operations: first time length press, second time length press, and the second time length is greater than the first time length.

55. The straddle type vehicle of claim 34, wherein when the vehicle-mounted terminal transmits the driving data to the first portable device, the first portable device is capable of establishing a driving log based on the driving data, and the first portable device is capable of storing the driving log locally or transmitting the driving log to the cloud platform for storage.

56. A straddle type vehicle comprising
a vehicle body comprising a front vehicle body and a rear vehicle body, with a saddle area for a user to ride defined between the front vehicle body and the rear vehicle body, a first portable device of a vehicle user is detachably mounted on the front vehicle body,
a suspension assembly connected to the vehicle body;
a wheel assembly comprising a first wheel connected to the front vehicle body by the suspension assembly and a second wheel connected to the rear vehicle body by the suspension assembly;
a steering assembly connected to the first wheel by the suspension assembly, the steering assembly comprising a steering handlebar; and
a vehicle-mounted terminal arranged on the vehicle body, the vehicle-mounted terminal is capable of acquiring driving data of the straddle type vehicle and transmitting signals with the first portable device;
when the straddle type vehicle is running, the vehicle-mounted terminal transmitted signals with the first portable device is capable of transmitting the driving data to the first portable device, and the driving data is capable of being converted into instrument images for display on the display interface of the first portable device.

57. The straddle type vehicle of claim 56, further comprising a LAN cable and at least one acquisition module for acquiring the driving data of the straddle type vehicle, the acquisition module is connected to the vehicle-mounted terminal by the LAN cable.

58. The straddle type vehicle of claim 57, wherein the vehicle-mounted terminal comprises a communication module connected to the LAN cable, the communication module is capable of transmitting signals with the first portable device, and is capable of acquiring the driving data from the LAN cable and transmitting the driving data to the first portable device.

59. The straddle type vehicle of claim 58, wherein the communication module comprises a short distance transmission module and a long distance transmission module, and the straddle type vehicle is capable of transmitting the driving data to the first portable device via the short distance transmission module and the long distance transmission module.

60. The straddle type vehicle of claim 59, wherein the straddle type vehicle is capable of performing information interaction with a cloud platform via the long distance transmission module, and the straddle type vehicle is capable of receiving an OTA upgrade software sent by the cloud platform via the long distance transmission module.

61. The straddle type vehicle of claim 59, wherein the straddle type vehicle is capable of receiving a remote command sent by the first portable device via the long distance transmission module, and the remote command is selected from at least one of the group consisting of a vehicle locking command, a vehicle unlocking command, and an anti-theft command; the straddle type vehicle is further capable of receiving vehicle locking command, vehicle unlocking command, and anti-theft command sent by the first portable device via the short distance transmission module.

62. The straddle type vehicle of claim 58, wherein the communication module is a short distance transmission module selected from the group consisting of: a Bluetooth communication module, a ZigBee communication module, a Wi-Fi communication module, an ultra-wideband (UWB) communication module, a radio frequency communication module, and an infrared communication module.

63. The straddle type vehicle of claim 62, wherein the straddle type vehicle is capable of interacting information with the cloud platform by the first portable device, which is capable of receiving OTA upgrade software sent by the cloud platform; when the vehicle-mounted terminal is disconnected from the first portable device, the first portable device is capable of storing the OTA upgrade software; when the vehicle-mounted terminal is re-connected to the first portable device, the straddle type vehicle is capable of obtaining the OTA upgrade software from the first portable device via the short distance transmission module and is capable of upgrading based on the OTA upgrade software.

64. The straddle type vehicle of claim 62, wherein the vehicle-mounted terminal further comprises a storage module connected to the short distance transmission module, when the vehicle-mounted terminal is disconnected from the first portable device, the storage module is capable of storing the driving data, and when the vehicle-mounted terminal is re-connected to the first portable device, the storage module is capable of transmitting the stored driving data to the first portable device via the short distance transmission module.

65. The straddle type vehicle of claim 58, wherein the steering handlebar is provided with an hand control member selected from at least one of the group consisting of: a button, a knob, and a toggle key; the hand control member is connected to the communication module, and when the hand control member outputs a control command, the communication module is capable of transmitting the control command to the first portable device to control the first portable device to perform corresponding display.

66. The straddle type vehicle of claim 65, wherein the first portable device is built-in with an application program, and the first portable device is capable of executing navigation functions when running the application program, and the driving data is capable of being displayed on a navigation image that executes the navigation function.

67. The straddle type vehicle of claim 66, wherein the control command outputted by the hand control members is capable of controlling the first portable device to switch between the instrument images and the navigation images.

68. The straddle type vehicle of claim 66, wherein a display interface of the first portable device for executing the navigation function comprises a first display area for displaying the navigation image and a second display area for displaying the driving data, and an area occupied by the first display area is greater than an area occupied by the second display area.

69. The straddle type vehicle of claim 65, wherein when the straddle type vehicle is started, the communication module is capable of sending a startup command to the first portable device, and the vehicle-mounted terminal is capable of controlling the first portable device to display the instrument images by sending the startup command.

70. The straddle type vehicle of claim 69, wherein when the straddle type vehicle is started, if the first portable device does not display the instrument images, the first portable device is capable of being controlled to display the instrument images in response to an operation of the hand control member.

71. The straddle type vehicle of claim 57, further comprising a display screen connected to the LAN cable, when the first portable device does not display the instrument images, the driving data is capable of being converted into the instrument images of the straddle type vehicle for display on the display screen.

72. The straddle type vehicle of claim 71, wherein the vehicle-mounted terminal comprises a control module connected to the display screen, when the first portable device does not display the instrument images, the control module is capable of converting the driving data acquired by the acquisition module into the instrument images and controlling the display screen to display the instrument images.

73. The straddle type vehicle of claim 56, wherein the straddle type vehicle further comprises an anti-vibration bracket disposed on the front vehicle body, and the first portable device is detachably mounted on the front vehicle body by the anti-vibration bracket.

74. The straddle type vehicle of claim 73, wherein the anti-vibration bracket comprises a mounting member for mounting the first portable device and a fixing member, one end of the fixing member is fixedly connected to the vehicle body, the other end of the fixing member is provided with a rotating portion, and the mounting member is connected to the fixing member by the rotating portion to enable the first portable device to switch between a horizontal arrangement and a vertical arrangement by means of the rotating portion.

75. The straddle type vehicle of claim 65, wherein an image acquisition module capable of acquiring environmental information around the straddle type vehicle and capable of transmitting the environmental information to the vehicle-mounted terminal, the image acquisition module comprises at least one camera; the vehicle-mounted terminal is capable of transmitting the environmental information to the first portable device to enable the first portable device to perform AR navigation based on the environmental information.

76. The straddle type vehicle of claim 75, wherein the camera is at least partially oriented towards the rear side of the straddle type vehicle for acquiring image information on the rear side of the straddle type vehicle, when the hand control member sends a steering command, the image information acquired by the camera is capable of being displayed on the first portable device to enable blind spot detection.

77. The straddle type vehicle of claim 56, wherein a detection module selected from at least one of the group consisting of: an infrared radar, a millimeter wave radar, and an ultrasonic radar; the vehicle-mounted terminal is used to send the detection signal of the detection module to the first portable device to enable collision detection in response to the detection signal.

78. The straddle type vehicle of claim 65, wherein when the straddle type vehicle is running, the voice command of the user of the straddle type vehicle is capable of being transmitted to the first portable device by a second portable device carried by the user, and the voice command is capable of controlling the first portable device to enable corresponding displays.

79. The straddle type vehicle of claim 78, wherein the voice command of the user of the straddle type vehicle is capable of being transmitted to the first portable device by the second portable device for awakening the voice interaction function of the first portable device.

80. The straddle type vehicle of claim 79, wherein the hand control member is capable of sending a wake-up command to the first portable device by one or a plurality of touch operations for awakening the voice interaction function, if the hand control member is a button, the button is capable of sending the wake-up command to the first portable device by at least one of the following operations: first time length press, second time length press, and the second time length is greater than the first time length.

81. The straddle type vehicle of claim 65, wherein the driving data comprises vehicle information and vehicle control information, the vehicle information is selected from: current vehicle velocity, current vehicle gear, current vehicle temperature, and remaining fuel volume; and the vehicle control information is generated based on touch operations of the hand control member.
